# EUROPÄISCHE PATENTSCHRIFT

(11) **EP 3 812 031 B1**
(45) Veröffentlichungstag und Bekanntmachung des Hinweises auf die Patenterteilung: **27.08.2025**
(21) Anmeldenummer: 20197944.0
(22) Anmeldetag: 24.09.2020
(51) Int. Cl.: B01D 53/00, B05B 1/00

(54) **DÜSE ZUM VERDÜSEN EINES FLUIDS UND VERBRENNUNGSANLAGE**
NOZZLE FOR ATOMIZING A FLUID AND COMBUSTION SYSTEM
BUSE PERMETTANT D'ATOMISER UN FLUIDE ET INSTALLATION DE COMBUSTION

(30) Priorität: 25.10.2019 DE 102019007432; 31.10.2019 DE 102019007584
(43) Veröffentlichungstag der Anmeldung: 28.04.2021
(73) Patentinhaber: RS Rittel GmbH, 45966 Gladbeck (DE)
(72) Erfinder: Frühauf, Peter, 45964 Gladbeck (DE); Eßler, Julian, 45966 Gladbeck (DE)
(74) Vertreter: Von Rohr Patentanwälte Partnerschaft mbB

(56) Entgegenhaltungen:
- DE-A1- 102012 020 689
- DE-C- 395 134
- FR-A5- 2 165 381
- RU-C1- 2 102 160
- US-A- 6 098 904

## Beschreibung

Die vorliegende Erfindung betrifft eine Düse gemäß dem Oberbegriff des Anspruchs 1, eine Verbrennungsanlage, eine Verwendung einer Düse sowie ein Verfahren zur Verdüsung eines Fluids.

Insbesondere betrifft die vorliegende Erfindung die Verdüsung von Fluiden, insbesondere um aus einem Fluid ein Spray bzw. Aerosol zu erzeugen. Das Verdüsen eines Fluids bzw. das Erzeugen eines Sprays aus einem Fluid kann in vielen unterschiedlichen Gebieten eingesetzt werden. Besonders vorteilhaft kann die vorliegende Erfindung zur Abgasbehandlung in einer Verbrennungsanlage eingesetzt werden. Grundsätzlich ist die erfindungsgemäße Düse jedoch in beliebigen technischen Gebieten einsetzbar.

Grundsätzlich sind im Stand der Technik Düsen bekannt, die einen Strömungsquerschnitt aufweisen, der sich in einer Strömungsrichtung zu einem minimalen Strömungsquerschnitt verengt und danach wieder vergrößert. Derartige Düsen werden als Lavaldüsen bezeichnet.

Mittels einer Lavaldüse ist es möglich, ein Fluid auf Überschallgeschwindigkeit zu beschleunigen, ohne dass es zu starken Verdichtungsstößen kommt. Dies wird durch den sich zunächst verengenden und dann wieder vergrößernden Strömungsquerschnitt erreicht.

Die DE 395 134 C betrifft einen Diffusor, bei dem in oder hinter einer Erweiterung des Strömungskanals ein Staukörper angeordnet ist. Hierdurch vermindern sich die Verluste durch Wirbelbildung und der Wirkungsgrad des Diffusors erhöht sich.

Die FR 2 165 381 A5 betrifft eine in Industrieanlagen zu verwendende Vorrichtung zur Dämpfung des durch den Auspuff der Gase in die Atmosphäre verursachten Geräusches. Die Vorrichtung besteht aus einem Coandä-Injektor äußerer Type, einer Abflussdüse und einem Dämpfungsschirm. Der Injektor weist einen Konus auf. Der Konus und ein oberer Abschnitt des Dämpfers bilden eine Düse mit zunehmendem Querschnitt.

Die US 6,098,904 A betrifft eine Düse zur Erzeugung eines hochwirksamen Weitwurfstrahls aus geblasener Luft. Der Luftstrahl wird industriell zur Reinigung und Trocknung von Oberflächen in Vorbereitung auf ein Lackieren oder Bekleben verwendet. Die Düse weist eine Geschosseinheit auf, die konzentrisch in dem Strömungskanal der Düse positioniert ist.

Die DE 10 2021 020 689 A1 betrifft einen Diffusor zum Einsatz in Trocknungssystemen.

Der Diffusor weist einen Zentralkörper auf, der im Inneren des Strömungskanals an den Diffusorwänden befestigt ist. Der Zentralkörper ist beabstandet von dem Diffusorwänden im Strömungskanal angeordnet.

Die RU 2102160 C1 betrifft einen Zerstäuber mit einem Gehäuse und einer Laval-düse. Der Zerstäuber weist einen rohrförmigen Einsatz mit einem axialen Kanal in Form einer Düse auf, der in dem Gehäuse installiert ist. Zwischen dem Einsatz und dem Gehäuse ist eine ringförmige Lücke gebildet. Über eine Zuführung, die seitlich an dem Gehäuse angeordnet ist, ist ein flüssiges Medium zuführbar.

Es ist eine Aufgabe der vorliegenden Erfindung, eine Lösung anzugeben, mit der der Einsatzbereich einer Lavaldüse erweitert wird.

Die obige Aufgabe wird gelöst durch eine Düse gemäß Anspruch 1, eine Verbrennungsanlage gemäß Anspruch 9, eine Verwendung gemäß Anspruch 10. Vorteilhafte Weiterbildungen sind Gegenstand der Unteransprüche.

Gemäß einem ersten Aspekt betrifft die vorliegende Erfindung eine Düse zum Verdüsen eines Fluids, wobei sich ein Strömungsquerschnitt der Düse in einer Strömungsrichtung bzw. Hauptströmungsrichtung bis zu einem minimalen Strömungsquerschnitt verengt und danach wieder vergrößert. Die Düse ist also insbesondere eine Lavaldüse.

Der Strömungsquerschnitt der erfindungsgemäßen Düse ist ringförmig.

Die erfindungsgemäße Düse weist eine Wandung und zusätzlich ein von der Wandung beabstandetes Verengungselement auf, wobei der minimale Strömungsquerschnitt zwischen der Wandung und dem Verengungselement gebildet ist. Vorzugsweise ist zwischen der Wandung und dem Verengungselement ein, insbesondere ringförmiger, Spalt gebildet, der den minimalen Strömungsquerschnitt aufweist oder bildet. Insbesondere kann hierdurch ein ringförmiger minimaler Strömungsquerschnitt realisiert werden.

Durch die erfindungsgemäße Ausbildung des Strömungsquerschnitts, also die ringförmige Ausbildung bzw. Bildung des minimalen Strömungsquerschnitts zwischen einer Wandung und einem Verengungselement, ist insbesondere ein nicht-vollflächiges Sprühbild realisierbar, beispielsweise ein Hohlkegel. Des Weiteren kann eine Verdüsung in eine von einer Hauptachse der Düse abweichende Richtung erfolgen. Auf diese Weise werden die Einsatzmöglichkeiten im Vergleich in bekannten Düsen mit vollflächigen Sprühbild vergrößert.

Außerdem werden die zur Verdüsung eines Fluids mittels des Lavalprinzips erforderlichen Drücke für das zu verdüsende Fluid und/oder eine dem Fluid beigemischte Druckluft gegenüber bekannten Lavaldüsen mit einem vollflächigen kreisförmigen bzw. elliptischen Querschnitt verringert.

Erfindungsgemäß ist ein Normalenvektor des minimalen Strömungsquerschnitts rechtwinklig zu einer Hauptachse der Düse. Hierdurch kann das Fluid in eine von der Hauptachse der Düse abweichende Richtung verdüst bzw. versprüht werden. Dies ist einem flexiblen und/oder vielseitigen Einsatz der Düse zuträglich.

Vorzugsweise ist das Verengungselement oder zumindest ein Abschnitt davon rundlich und/oder stromlinienförmig ausgebildet. Bevorzugt ist das Verengungselement oder ein Abschnitt davon zumindest im Wesentlichen kugelartig, kegelartig, ellipsoidal und/oder torusartig ausgebildet. Hierdurch können Energieverluste, insbesondere durch Verwirbelungen bzw. Turbulenzen, in der Düse vermieden oder reduziert werden und somit das Strömungsverhalten des Fluids innerhalb der Düse optimal gestaltet werden. Dies ist einem gleichmäßigen und optimierten Sprühbild und einem effizienten Betrieb der Düse zuträglich.

Vorzugsweise ist/sind die Düse und/oder das Verengungselement rotationssymmetrisch zu einer Hauptachse der Düse. Dies ist einem gleichmäßigen und optimierten Sprühbild zuträglich.

Es ist bevorzugt, dass sich eine Querschnittsfläche des Verengungselements entlang einer Hauptachse der Düse bzw. des Verengungselements zunächst vergrößert und anschließend wieder verkleinert. Besonders bevorzugt ändert sich die Querschnittsfläche des Verengungselements kontinuierlich. Insbesondere wird hierdurch erreicht, dass sich der Strömungsquerschnitt der Düse zunächst verengt und anschließend wieder vergrößert. Dies ist einer optimalen Strömung in der Düse sowie einem optimalen Sprühbild zuträglich.

Die Wandung und/oder das Verengungselement ist/sind vorzugsweise dazu ausgebildet, die Hauptströmungsrichtung des Fluids zu ändern und/oder den Fluidstrom aufzuspalten. Hierdurch kann das Fluid schräg zu einer Hauptachse der Düse verdüst bzw. versprüht werden und/oder ein nicht-vollflächiges Sprühbild realisiert werden.

Das Verengungselement ist vorzugsweise zentral und/oder symmetrisch in der Düse angeordnet. Alternativ oder zusätzlich bildet das Verengungselement gemeinsam mit der Wandung einen Strömungskanal, der in einem Längsschnitt durch die Düse zumindest im Wesentlichen Y-förmig, V-förmig und/oder T-förmig ist. Hierdurch kann das Fluid schräg zu einer Hauptachse der Düse verdüst bzw. versprüht werden und/oder ein nicht-vollflächiges Sprühbild realisiert werden.

Das Verengungselement ist bevorzugt innerhalb der Wandung angeordnet. Hierdurch ist ein nicht-vollflächiges Sprühbild realisierbar.

Die Düse und/oder das Verengungselement ist/sind vorzugsweise dazu ausgebildet, dass sich ein nicht-vollflächiges, insbesondere zumindest im Wesentlichen hohlzylindrisches oder hohlkegelförmiges, Sprühbild ergibt bzw. erzeugt wird. Hierdurch ist die Düse vielseitig und/oder flexibel einsetzbar.

Es ist bevorzugt, dass die Düse und/oder das Verengungselement dazu ausgebildet ist/sind, einen Sprühkegel mit einem Öffnungswinkel von mehr als 0° oder 45°, vorzugsweise mehr als 90°, bevorzugt mehr als 120°, insbesondere mehr als 150°, besonders bevorzugt etwa 180° zu erzeugen. Hierbei ist der Sprühkegel vorzugsweise ein Hohlkegel. Dies ist einem flexiblen und/oder vielseitigen Einsatz der Düse zuträglich.

Vorzugsweise ist die Position und/oder Größe des minimalen Strömungsquerschnitts - insbesondere durch Bewegen/Verschieben des Verengungselements - variabel bzw. veränderbar. Hierdurch sind die Sprüheigenschaften der Düse flexibel einstellbar bzw. anpassbar.

Das Verengungselement ist vorzugsweise bewegbar, insbesondere parallel zu einer Hauptachse der Düse. Es ist also bevorzugt, dass das Verengungselement parallel zur Hauptachse der Düse und/oder translatorisch verschiebbar ist. Alternativ oder zusätzlich kann das Verengungselement jedoch auch rotierbar und/oder zur Hauptachse der Düse verkippbar sein. Hierdurch lassen sich die Sprüheigenschaften der Düse bzw. das Sprühbild flexibel einstellen bzw. anpassen.

Gemäß einem weiteren, auch unabhängig realisierbaren Aspekt betrifft die vorliegende Erfindung eine Verbrennungsanlage, insbesondere Großverbrennungsanlage, mit mindestens einer wie voranstehend beschrieben ausgebildeten Düse. Die Düse ist dabei besonders bevorzugt zur Verdüsung eines Fluids in einen Abgasraum der Verbrennungsanlage für die Abgasbehandlung, insbesondere Abgasreinigung bzw. Rauchgasreinigung, ausgebildet. Hierdurch kann die Abgasbehandlung besonders effektiv bzw. effizient und/oder flexibel erfolgen.

Gemäß einem weiteren, auch unabhängig realisierbaren Aspekt betrifft die vorliegende Erfindung eine Verwendung einer wie voranstehend beschrieben ausgebildeten Düse zur Abgasbehandlung, insbesondere Abgasreinigung bzw. Rauchgasreinigung, in einer Verbrennungsanlage, insbesondere Großverbrennungsanlage.

Gemäß einem weiteren, auch unabhängig realisierbaren Aspekt betrifft die vorliegende Erfindung ein Verfahren zur Verdüsung eines Fluids mit einer wie voranstehend ausgebildeten Düse, wobei eine Position und/oder Lage des Verengungselements während einer Verdüsung geändert wird. Hierdurch ist das Verfahren bzw. die Düse flexibel und/oder vielseitig einsetzbar. Insbesondere ist das Sprühbild hierdurch veränderbar bzw. anpassbar.

Die oben genannten Merkmale der vorliegenden Erfindung sowie die sich aus den Ansprüchen und der nachfolgenden Beschreibung ergebenden Aspekte und Merkmale der vorliegenden Erfindung können grundsätzlich unabhängig voneinander, aber auch in verschiedenen Kombinationen realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: einen schematischen Schnitt durch eine Lavaldüse gemäß dem Stand der Technik;
- Fig. 2: eine schematische Schnittdarstellung einer Düse die nicht unter den Schutzumfang der Ansprüche fällt;
- Fig. 3: eine schematische perspektivische Darstellung einer Düse die nicht unter den Schutzumfang der Ansprüche fällt.
- Fig. 4: eine schematische Schnittdarstellung einer Düse die nicht unter den Schutzumfang der Ansprüche fällt;
- Fig. 5: eine schematische Schnittdarstellung einer vorschlagsgemäßen Düse; und
- Fig. 6: eine schematische Darstellung einer Verbrennungsanlage mit einer vorschlagsgemäßen Düse.

In den teilweise nicht maßstabsgerechten, nur schematischen Figuren werden für gleiche oder gleichartige Bauteile und Komponenten dieselben Bezugszeichen verwendet, wobei entsprechende oder vergleichbare Eigenschaften und Vorteile erreicht werden können, auch wenn von einer wiederholten Beschreibung abgesehen wird.

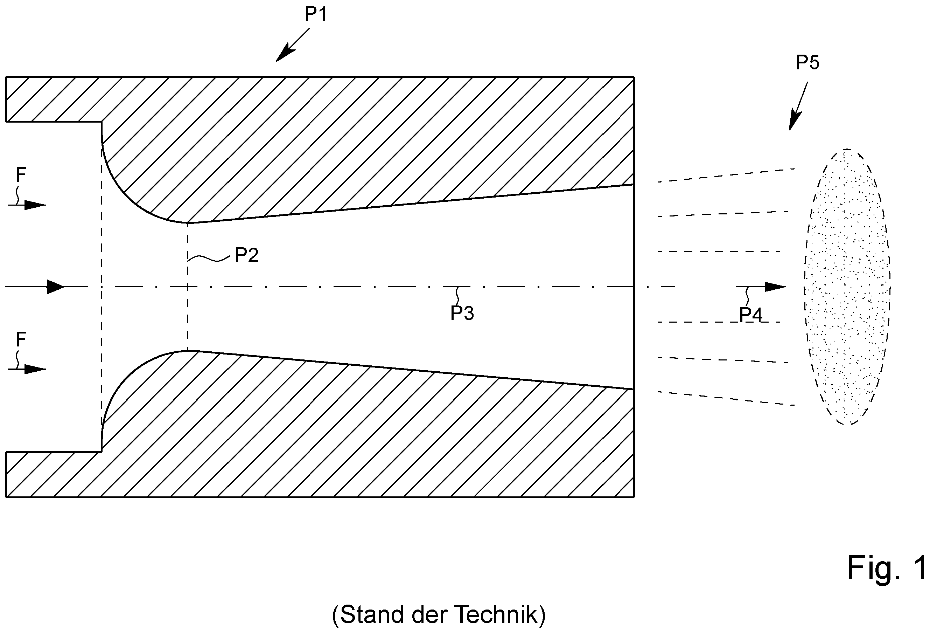

Fig. 1 zeigt eine aus dem Stand der Technik bekannte Lavaldüse P1 in einem Längsschnitt.

Die Lavaldüse P1 ist zum Verdüsen eines Fluids F ausgebildet. Die Lavaldüse P1 weist einen Strömungsquerschnitt auf, der sich in Strömungsrichtung des Fluids F (in Fig. 1 also von links nach rechts) zunächst verkleinert, bis ein minimaler Strömungsquerschnitt P2 erreicht ist. Danach vergrößert sich der Strömungsquerschnitt vorzugsweise wieder.

Die aus dem Stand der Technik bekannte Lavaldüse P1 ist vorzugsweise rotationssymmetrisch zu einer Hauptachse P3 ausgebildet. Insbesondere ist der minimale Strömungsquerschnitt P2 eine kreisförmige oder elliptische Fläche. Durch diese Konstruktion ist die Hauptsprührichtung P4 der Lavaldüse P1 parallel zur Hauptachse P3 und ergibt sich ein vollflächiges Sprühbild P5, wie in Fig. 1 schematisch angedeutet.

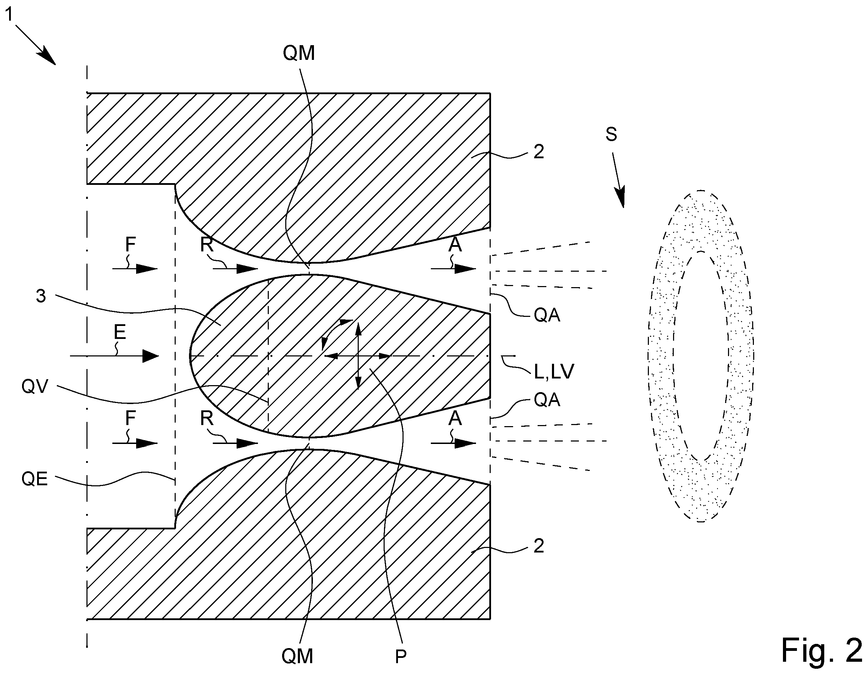

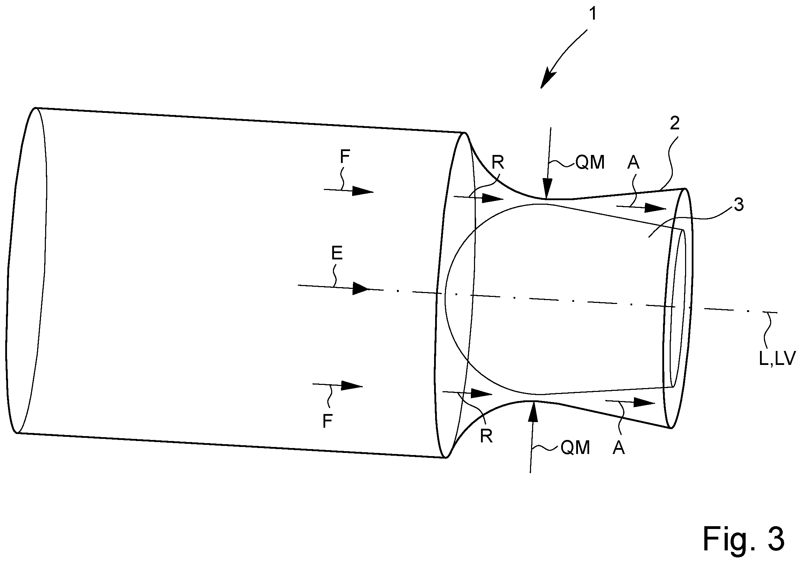

Fig. 2 zeigt eine vorschlagsgemäße Düse 1 gemäß einer ersten Ausführungsform in einem schematischen Längsschnitt. In Fig. 3 ist eine vorschlagsgemäße Düse 1 gemäß der ersten Ausführungsform in einer schematischen perspektivischen Darstellung gezeigt.

Die Düse 1 gemäß der ersten Ausführungsform fällt nicht unter den Schutzumfang der Ansprüche.

Die Düse 1 weist eine Hauptachse L auf. Die Hauptachse L ist vorzugsweise eine Längsachse, Haupterstreckungsachse und/oder Symmetrieachse der vorzugsweise länglichen und/oder rotationssymmetrischen Düse 1. Vorzugsweise ist die Düse 1 symmetrisch, insbesondere rotationssymmetrisch, zur Hauptachse L ausgebildet.

Die Düse 1 ist vorzugsweise zum Verdüsen bzw. Versprühen eines Fluids F ausgebildet.

Die Düse 1 weist eine Einströmrichtung E auf. Die Einströmrichtung E ist insbesondere die Strömungsrichtung bzw. Hauptströmungsrichtung des in die Düse 1 einströmenden Fluids F. Vorzugsweise verläuft die Einströmrichtung E parallel zu der Hauptachse L.

Die Düse 1 weist eine Ausströmrichtung A auf. Die Ausströmrichtung A ist insbesondere die Strömungsrichtung bzw. Hauptströmungsrichtung des die Düse 1 verlassenden bzw. aus der Düse 1 ausströmenden Fluids F, wobei das Fluid F beim Ausströmen aus der Düse vorzugsweise bereits in ein Spray umgewandelt wurde bzw. als Spray vorliegt. Die Düse 1 kann mehrere bzw. verschiedene Ausströmrichtungen A aufweisen.

Die Düse 1 weist vorzugsweise eine Hauptströmungsrichtung R des Fluids F auf oder definiert diese.

Als Hauptströmungsrichtung R wird vorzugsweise die jeweilige bzw. lokale Strömungsrichtung bzw. Hauptströmungsrichtung des Fluids F bezeichnet. Diese (lokale) Hauptströmungsrichtung R kann also variabel sein bzw. sich beim Durchströmen der Düse 1 ändern. Beim Einströmen des Fluids F in die Düse 1 entspricht die Hauptströmungsrichtung R der Einströmrichtung E. Beim Ausströmen des Fluids F bzw. des daraus erzeugten Sprays aus der Düse 1 entspricht die Hauptströmungsrichtung R der Ausströmrichtung A.

Die Düse 1 weist einen variablen bzw. sich verändernden Strömungsquerschnitt auf.

Als Strömungsquerschnitt im Sinne der vorliegenden Erfindung wird insbesondere die Größe der von dem Fluid F durchströmten Fläche bezeichnet, wobei diese Fläche senkrecht zur (lokalen) Hauptströmungsrichtung R angeordnet ist. Der Strömungsquerschnitt ist nicht notwendigerweise eine ebene Fläche, sondern kann auch eine gebogene Fläche oder dergleichen sein.

Der Strömungsquerschnitt der Düse 1 verringert bzw. verengt sich entlang der Hauptströmungsrichtung R und/oder Hauptachse L zu einem minimalen Strömungsquerschnitt QM und vergrößert sich danach wieder. Die Düse 1 ist also insbesondere eine Lavaldüse.

Insbesondere weist die Düse 1 einen Eingangsquerschnitt QE, einen Ausgangsquerschnitt QA und einen minimalen Querschnitt QM auf, wobei der Eingangsquerschnitt QE und der Ausgangsquerschnitt QA jeweils größer sind als der minimale Strömungsquerschnitt QM und der minimale Strömungsquerschnitt QM den kleinsten Strömungsquerschnitt zwischen dem Eingangsquerschnitt QE und dem Ausgangsquerschnitt QA bildet.

Der Bereich zwischen dem Eingangsquerschnitt QE und dem minimalen Strömungsquerschnitt QM wird vorzugsweise auch als konvergenter Bereich bezeichnet. Der Bereich zwischen dem minimalen Strömungsquerschnitt QM und dem Ausgangsquerschnitt QA wird vorzugsweise auch als divergenter Bereich bezeichnet.

Der minimale Strömungsquerschnitt QM der erfindungsgemäßen Düse 1 ist ringförmig. Dies ist insbesondere auch aus Fig. 3 ersichtlich, die eine Düse 1 gemäß der ersten Ausführungsform in einer schematischen perspektivischen Darstellung zeigt.

Ein ringförmiger minimaler Strömungsquerschnitt QM ist insbesondere ein minimaler Strömungsquerschnitt QM, der durch eine zusammenhängende Fläche gebildet ist, die ein vorzugsweise mittiges bzw. zentrales Loch aufweist.

Der minimale Strömungsquerschnitt QM weist vorzugsweise die Form eines Kreisrings oder elliptischen Rings auf.

Insbesondere bietet eine ringförmige Ausbildung des minimalen Strömungsquerschnitts QM den Vorteil, dass der zum Verdüsen des Fluids F mittels des Lavalprinzips benötigte Druck verringert wird. Insbesondere lässt sich durch die ringförmige Ausbildung des minimalen Strömungsquerschnitts QM im Vergleich zu einer aus dem Stand der Technik bekannten Lavaldüse P1 mit gleicher minimaler Querschnittsfläche bei geringerem Druck die gleiche Tröpfchengröße des aus dem Fluid F erzeugten Sprays erreichen.

Die Düse 1 weist eine Wandung 2 auf.

Die Wandung 2 ist vorzugsweise eine umlaufende Wandung 2. Die Wandung 2 ist vorzugweise symmetrisch, insbesondere rotationssymmetrisch, zur Hauptachse L angeordnet.

Bevorzugt bildet die Wandung 2 eine äußere und/oder radiale Begrenzung des Strömungsquerschnitts.

Die Wandung 2 ist vorzugsweise rohrartig bzw. hohlzylindrisch ausgebildet und/oder definiert vorzugsweise einen kreisförmigen oder elliptischen Strömungskanal. Vorzugsweise weist die Wandung 2 einen kreisförmigen oder elliptischen Strömungsquerschnitt auf bzw. begrenzt diesen.

Die Düse 1 weist ein Verengungselement 3 auf. Das Verengungselement 3 ist zur Verengung des Strömungsquerschnitts der Düse 1 ausgebildet. Das Verengungselement 3 zusätzlich zu der Wandung 2 vorgesehen und (radial) von der Wandung 2 beabstandet.

Das Verengungselement 3 ist vorzugsweise über in den Figuren nicht dargestellte Verbindungselemente wie Streben oder dergleichen an der Wandung 2 gehalten bzw. befestigt bzw. mit der Wandung 2 verbunden. Bevorzugt ist das Verengungselement 3 durch eine (nicht dargestellte) Achse gehalten bzw. an der Wandung 2 befestigt bzw. mit der Wandung 2 verbunden. Die Achse ist vorzugsweise in einem Zustrombereich bzw. stromauf des Eingangsquerschnitts QE in einer Passbohrung geführt.

Der minimale Strömungsquerschnitt QM ist zwischen der Wandung 2 und dem Verengungselement 3 gebildet. Insbesondere ist die Wandung 2 - wie insbesondere in Fig. 2 dargestellt - gebogen ausgebildet, sodass sich bei der Düse 1 auch ohne das Verengungselement 3 eine Querschnittsverringerung ergeben würde. Dies ist jedoch nicht zwingend.

Vorzugsweise ist durch die Wandung 2 und das Verengungselement 3 bzw. zwischen der Wandung 2 und dem Verengungselement 3 ein, insbesondere ringförmiger, Spalt gebildet, der den minimalen Strömungsquerschnitt QM aufweist und/oder bildet.

Das Verengungselement 3 oder ein Abschnitt 3A davon ist vorzugsweise rundlich und/oder stromlinienförmig ausgebildet. Hierdurch können optimale Strömungseigenschaften innerhalb der Düse 1 erzielt werden, insbesondere Turbulenzen bzw. Verwirbelungen vermieden werden.

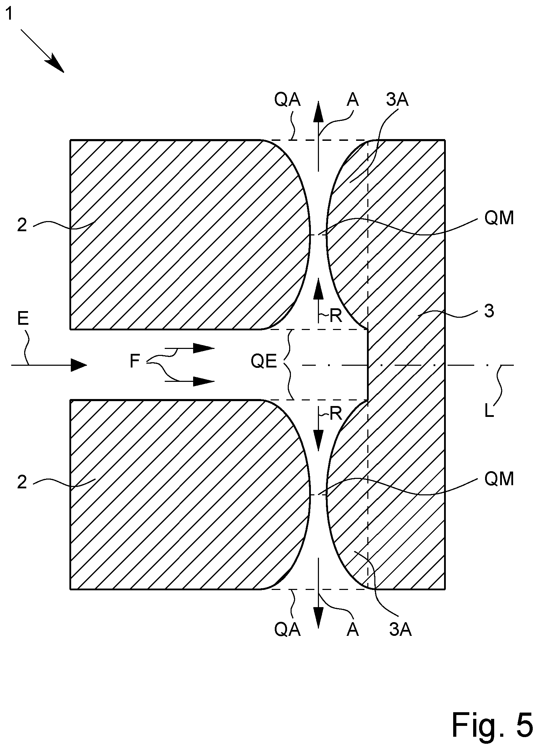

Das Verengungselement 3 oder ein Abschnitt 3A davon ist, insbesondere bei der ersten Ausführungsform, vorzugsweise zumindest im Wesentlichen kugelartig, kegelartig, und/oder ellipsoidal ausgebildet, wie insbesondere in Fig. 2 und 3 dargestellt. Grundsätzlich kann das Verengungselement 3 oder ein Abschnitt 3A davon jedoch auch eine andere Form aufweisen, beispielsweise torusartig ausgebildet sein, insbesondere bei der in Fig. 5 dargestellten dritten Ausführungsform. Hierauf wird später noch eingegangen.

Vorzugsweise sind die Wandung 2 und das Verengungselement 3 spiegelbildlich zueinander ausgebildet. Mit anderen Worten sind also die Wandung 2 und das Verengungselement 3 bzw. deren einander zugewandten Seiten in einem Querschnitt bzw. Schnitt senkrecht zur Hauptachse L der Düse 1 vorzugsweise symmetrisch bezüglich einer mittig zwischen der Wandung 2 und dem Verengungselement 3 verlaufenden Achse.

Vorzugsweise weist das Verengungselement 3 eine Hauptachse LV auf. Die Hauptachse LV des Verengungselements 3 ist vorzugsweise eine Längsachse, Haupterstreckungsachse und/oder Symmetrieachse des vorzugsweise länglichen und/oder rotationssymmetrischen Verengungselements 3. Vorzugsweise ist das Verengungselement 3 symmetrisch, insbesondere rotationssymmetrisch, zur Hauptachse LV ausgebildet.

Das Verengungselement 3 ist vorzugsweise symmetrisch zu der Hauptachse L der Düse 1 angeordnet und/oder rotationssymmetrisch zu der Hauptachse L der Düse 1 ausgebildet.

Die Hauptachse L der Düse 1 ist vorzugsweise identisch zu der Hauptachse LV des Verengungselements 3. Es sind jedoch auch Lösungen möglich, bei denen die Hauptachse L und die Hauptachse LV zueinander verkippt und/oder verkippbar sind.

In Einströmrichtung E und/oder in Hauptströmungsrichtung R und/oder entlang der Hauptachse L, LV vergrößert sich vorzugsweise zunächst eine Querschnittsfläche QV des Verengungselements 3 und verkleinert sich anschließend wieder. Hierdurch wird insbesondere die Verengung und anschließende Vergrößerung des Strömungsquerschnitts der Düse 1 erreicht.

Vorzugsweise ist der minimale Strömungsquerschnitt QM an der Stelle gebildet, an dem das Verengungselement 3 die maximale Querschnittsfläche QV aufweist.

Als Querschnittsfläche QV des Verengungselements 3 wird insbesondere die Fläche des Verengungselements 3 in einem Schnitt senkrecht zur Hauptachse LV des Verengungselements 3 bezeichnet.

Die Querschnittsfläche QV des Verengungselements 3 ändert sich vorzugsweise kontinuierlich. Mit anderen Worten weist die Oberfläche des Verengungselements 3 vorzugsweise also keine Kanten, Stufen, Unebenheiten oder sonstige Diskontinuitäten auf. Dies ist einer optimalen Strömung des Fluids F durch die Düse 1 zuträglich.

Alternativ oder zusätzlich zu der Veränderung des Strömungsquerschnitts durch die sich ändernde Querschnittsfläche QV des Verengungselements 3 kann die Veränderung des Strömungsquerschnitts durch eine Veränderung des durch die Wandung 2 begrenzten bzw. gebildeten Querschnitts gebildet bzw. bewirkt sein.

Bei der ersten Ausführungsform gemäß Fig. 2 verändert sich der Strömungsquerschnitt vorzugsweise dadurch, dass sich einerseits die Querschnittsfläche QV des Verengungselements 3 verändert und andererseits der durch die Wandung 2 begrenzte bzw. gebildete Querschnitt sich verändert, insbesondere durch eine gebogene Ausbildung der Wandung 2 bzw. der Innenseite der Wandung 2. Grundsätzlich ist es jedoch auch möglich, dass die Wandung 2 bzw. die Innenseite der Wandung 2 gerade ausgebildet ist bzw. parallel zur Hauptachse L der Düse 1 und/oder zur Hauptachse LV des Verengungselements 3 verläuft, so dass der durch die Wandung 2 begrenzte bzw. gebildete Querschnitt konstant ist und somit die Veränderung des Strömungsquerschnitt lediglich durch die sich ändernde Querschnittsfläche QV des Verengungselements 3 bewirkt ist.

Ferner ist es grundsätzlich auch möglich, dass das Verengungselement 3 einen konstanten Querschnitt bzw. eine konstante Querschnittsfläche QV aufweist und sich die Wandung 2 verengt, so dass auf diese Weise die Veränderung des Strömungsquerschnitts bewirkt sind.

Die Fläche des minimalen Strömungsquerschnitts QM kann beispielsweise etwa 7 mm² betragen, vorzugsweise wobei der Innendurchmesser des ringförmigen minimalen Strömungsquerschnitts Qm bzw. der Durchmesser des Verengungselements 3 senkrecht zur Hauptachse LV des Verengungselements 3 an der Stelle des minimalen Strömungsquerschnitts QM etwa 20 mm beträgt und der Abstand bzw. die Breite des Spalts zwischen der Wandung 2 und dem Verengungselement 3 an dieser Stelle etwa 0,1125 mm beträgt.

Die Wandung 2 und/oder das Verengungselement 3 ist/sind dazu ausgebildet, den Fluidstrom aufzuspalten. Dies ist insbesondere aus Fig. 2 und 3 ersichtlich.

Vor dem Verengungselement 3 wird der durch die Wandung 2 gebildete Strömungsquerschnitt vorzugsweise vollflächig von dem Fluid F durchströmt. Das Verengungselement 3 stellt ein Hindernis für das Fluid F dar, sodass das Fluid F durch das Verengungselement 3 abgelenkt wird. Insbesondere wird hierdurch der Strom des Fluids F aufgespalten, da selbstverständlich kein Fluid F das Verengungselement 3 durchströmen kann. Während also der Eingangsquerschnitt QE vollflächig ist, beispielsweise kreisförmig oder elliptisch, ist der minimale Strömungsquerschnitt QM vorzugsweise ringförmig, sodass in diesem Sinne der Fluidstrom aufgespalten wird, insbesondere von einer vollflächigen Strömung in eine dezentrale Strömung, bei der ein zentraler Bereich, insbesondere um die Hauptachse L, LV nicht durchströmt wird.

Das Verengungselement 3 ist vorzugsweise innerhalb der Wandung 2 angeordnet bzw. radial von der Wandung 2 umgeben. Mit anderen Worten umgibt die Wandung 2 vorzugsweise das Verengungselement 3 radial zur Hauptachse L der Düse 1.

Das Verengungselement 3 ist vorzugsweise zentral und/oder symmetrisch in der Düse 1 bzw. zu der Hauptachse L der Düse 1 angeordnet.

Bei der ersten Ausführungsform gemäß Fig. 2 und 3 bleibt die Hauptströmungsrichtung R des Fluids F in der Düse 1 vorzugsweise erhalten bzw. ist die Ausströmrichtung A vorzugsweise parallel bzw. identisch zur Einströmrichtung E. Mit anderen Worten ist die Hauptströmungsrichtung R nach dem minimalen Strömungsquerschnitt QM und/oder im divergenten Bereich und/oder bei dem Ausgangsquerschnitt QA parallel bzw. identisch zu der Einströmrichtung E und/oder der Hauptachse L der Düse 1 und/oder der Hauptachse LV des Verengungselements 3.

Die Düse 1 und/oder das Verengungselement 3 ist/sind vorzugsweise dazu ausgebildet, dass sich ein nicht-vollflächiges, insbesondere zumindest im Wesentlichen hohlzylindrisches oder hohlkegelförmiges, Sprühbild S ergibt bzw. mit der Düse 1 erzeugt wird. Insbesondere wird also ein zentraler Bereich hinter dem Verengungselement 3 bzw. um die Hauptachse L, LV herum nicht besprüht, wie insbesondere auch Fig. 2 ersichtlich ist.

Als Sprühbild S wird insbesondere die Form bzw. Geometrie des von der Düse 1 aus dem Fluid F erzeugten bzw. verdüsten bzw. versprühten Sprays bzw. Aerosols bezeichnet.

Ein Sprührichtung bzw. Hauptsprührichtung der Düse 1 ist insbesondere eine Richtung, in die das Fluid F bzw. das daraus erzeugte Spray versprüht wird. Die Sprührichtung bzw. Hauptsprührichtung ist vorzugsweise identisch zu der Ausströmrichtung A.

Ein nicht-vollflächiges Sprühbild S ist insbesondere ein Sprühbild, bei dem das Spray eine durch die äußersten Teilchen des Sprays begrenzte und insbesondere quer bzw. senkrecht zur Sprührichtung angeordnete Fläche nicht vollflächig und/oder nur teilweise besprüht. Insbesondere kann bei einem nicht-vollflächigen Sprühbild S die von dem Spray besprühte bzw. besprühbare Fläche ein Loch aufweisen und/oder ringförmig ausgebildet sein. Vorzugsweise weist ein nicht-vollflächiges Sprühbild S einen insbesondere zentralen Bereich auf, der nicht besprüht wird bzw. auf den kein Spray trifft. Dies ist beispielhaft auf der rechten Seite in Fig. 2 angedeutet.

Ein vollflächiges Sprühbild S ist insbesondere ein Sprühbild, bei dem das Spray eine durch die äußersten Teilchen des Sprays begrenzte Fläche vollflächig besprüht. Dies ist beispielsweise bei der aus dem Stand der Technik bekannten Lavaldüse P1 der Fall und beispielhaft in Fig. 1 dargestellt.

Die Düse 1 (gemäß dem ersten Ausführungsbeispiel) weist vorzugsweise ein im Wesentlichen hohlzylindrisches Sprühbild S auf. Dies ergibt sich insbesondere dadurch, dass der minimale Strömungsquerschnitt QM ringförmig ist und die Hauptströmungsrichtung R das Fluid F in der Düse 1 nicht verändert wird, so dass die Ausströmrichtung A parallel zur Einströmrichtung E ist und sich somit ein ringförmiger Ausgangsquerschnitt QA ergibt, durch den das Fluid F bzw. das hieraus erzeugte Spray hindurchtritt und zumindest im Wesentlichen auf dem Zylindermantel eines sich von der Düse 1 in Ausströmrichtung A erstreckenden Zylinders bzw. Hohlzylinder fortsetzt.

Vorzugsweise ist die Position und/oder Größe des minimalen Strömungsquerschnitts QM variabel.

Das Verengungselement 3 ist vorzugsweise bewegbar. Insbesondere ist das Verengungselement 3 parallel zu der Hauptachse L der Düse 1 und/oder der Hauptachse LV des Verengungselements 3 bewegbar bzw. verschiebbar, radial zu der Hauptachse L der Düse 1 und/oder der Hauptachse L des Verengungselements 3 bewegbar bzw. verschiebbar und/oder zu der Hauptachse L der Düse 1 und/oder der Hauptachse LV des Verengungselements 3 schwenkbar bzw. verkippbar. Dies ist insbesondere durch entsprechende Pfeile P in Fig. 2 angedeutet.

Insbesondere ist durch eine Bewegung des Verengungselements 3, insbesondere innerhalb der Düse 1 und/oder relativ zu der Wandung 2, die Position und/oder Größe des minimalen Strömungsquerschnitts QM variabel bzw. veränderbar. Beispielsweise kann das Verengungselement 3 entlang der Hauptachse L, LV bewegt werden, so dass sich die Position des Verengungselements 3 relativ zu der Wandung 2 verändert und sich hierdurch die axiale Position des minimalen Strömungsquerschnitts QM verschiebt. Hierdurch kann beispielsweise die Düse 1 an unterschiedliche Strömungsgeschwindigkeiten bzw. Volumenströme des Fluids F und/oder unterschiedliche Fluiddrücke optimal angepasst werden. Insbesondere kann durch eine Variation der Position und/oder der Größe des minimalen Strömungsquerschnitts QM das Sprühbild S beeinflusst bzw. angepasst werden. Auf diese Weise kann die Düse 1 flexibel für unterschiedliche Zwecke eingesetzt bzw. für unterschiedliche Einsätze angepasst werden.

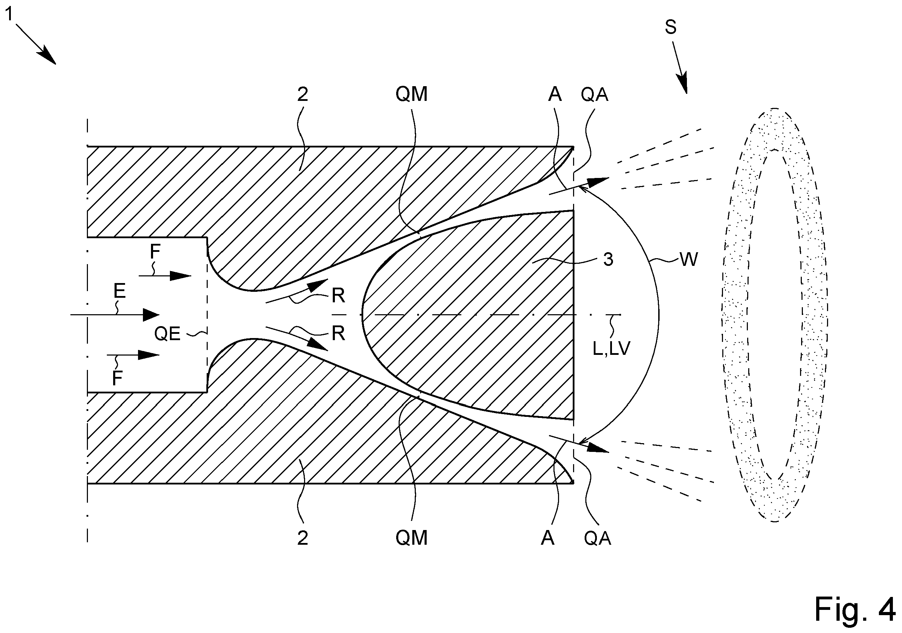

Nachfolgend wird insbesondere detaillierter auf die zweite Ausführungsform, die insbesondere in Fig. 4 dargestellt ist, eingegangen. Die zweite Ausführungsform stimmt jedoch in einer Vielzahl von Merkmalen mit der ersten Ausführungsform gemäß Fig. 2 und 3 überein, sodass nachfolgend insbesondere lediglich auf die Unterschiede zwischen der ersten und der zweiten Ausführungsform eingegangen wird. Dementsprechend gelten die vorigen Erläuterungen und Ausführungen mit Bezug auf die erste Ausführungsform vorrangig auch für die zweite Ausführungsform, sofern nichts anderes explizit erläutert oder aus dem Zusammenhang ersichtlich ist.

Die Düse 1 gemäß der zweiten Ausführungsform fällt nicht unter den Schutzumfang der Ansprüche.

Wie bereits bei der ersten Ausführungsform erläutert, kann die Wandung 2 zumindest abschnittsweise gerade ausgebildet sein. Dies ist beispielhaft in Fig. 4 angedeutet. Insbesondere wird in diesem Fall eine Verengung des Strömungsquerschnitts dadurch erreicht, dass sich die Querschnittsfläche QV des Verengungselements 3 verändert bzw. der Abstand zwischen dem Verengungselement 3 und der Wandung 2 entlang der Strömungsrichtung R ändert. Es ist jedoch nicht zwingend, dass die Wandung 2 einen geraden Abschnitt aufweist.

Gemäß der zweiten Ausführungsform ist/sind die Düse 1, die Wandung 2 und/oder das Verengungselement 3, insbesondere im Unterschied zu der ersten Ausführungsform, vorzugsweise dazu ausgebildet, die Hauptströmungsrichtung R des Fluids F zu ändern. Insbesondere weicht also die Ausströmrichtung A von der Einströmrichtung E ab.

Vorzugsweise verläuft die Ausströmrichtung A schräg zu der Einströmrichtung E und/oder der Hauptachse L der Düse 1 und/oder der Hauptachse LV des Verengungselements 3.

Vorzugsweise bildet das Verengungselement 3 gemeinsam mit der Wandung 2 einen Strömungskanal, der in einem Längsschnitt, insbesondere durch die Hauptachse L der Düse 1 und/oder die Hauptachse LV des Verengungselements 3, zumindest im Wesentlichen Y-förmig bzw. V-förmig ist. Dies ist insbesondere in Fig. 4 dargestellt. Mit anderen Worten ist der zwischen der Wandung 2 und dem Verengungselement 3 gebildete Strömungskanal vorzugsweise zumindest im Wesentlichen kegelartig.

Vorzugsweise ist bei der zweiten Ausführungsform das Sprühbild S zumindest im Wesentlichen hohlkegelförmig. Dies wird insbesondere dadurch bewirkt, dass die Ausströmrichtung A schräg zu der Einströmrichtung E und/oder der Hauptachse L der Düse 1 verläuft. Vorzugsweise ist durch das aus der Düse 1 austretende Fluid F bzw. Spray also zumindest im Wesentlichen ein Hohlkegel gebildet, wie in Fig. 4 sehr schematisch angedeutet ist.

Das Sprühbild S bzw. der Hohlkegel weist vorzugsweise einen Öffnungswinkel W auf. Der Öffnungswinkel W ist vorzugsweise der Winkel zwischen den Ausströmrichtungen A des Fluids F auf zwei radial gegenüberliegenden Seiten der Hauptachse L der Düse 1 und/oder der Hauptachse LV des Verengungselements 3. Dies ist in Fig. 4 schematisch angedeutet.

Mit anderen Worten ist der Öffnungswinkel W vorzugsweise des Doppelte des zwischen der Hauptachse L der Düse 1 und/oder der Hauptachse LV des Verengungselements 3 eingeschlossenen Winkels.

Vorzugsweise ist/sind die Düse 1 und/oder das Verengungselement 3 dazu ausgebildet, einen Sprühkegel mit einem Öffnungswinkel W von mehr als 0° oder 45°, vorzugsweise mehr als 90°, bevorzugt mehr als 120°, insbesondere mehr als 150°, besonders bevorzugt etwa 180°, zu erzeugen.

Bei der zweiten Ausführungsform ist ein Normalenvektor des minimalen Strömungsquerschnitts QM vorzugsweise schräg oder quer zu der Hauptachse L der Düse 1 und/oder der Hauptachse LV des Verengungselements 3.

Ein Normalenvektor ist insbesondere ein Vektor, der senkrecht auf einer Fläche steht. Ein Normalenvektor des minimalen Strömungsquerschnitts QM ist dementsprechend ein Vektor, der senkrecht auf dem minimalen Strömungsquerschnitt QM steht. Der minimale Strömungsquerschnitt QM kann mehrere, insbesondere in verschiedene Richtungen weisende Normalenvektoren aufweisen. In Fig. 4 ist der Normalenvektor aus Übersichtlichkeitsgründen nicht explizit eingezeichnet, entspricht in seiner Richtung aber der Ausströmrichtung A. Die Ausströmrichtung A ist in Fig. 4 durch entsprechende Pfeile gekennzeichnet.

Vorzugsweise ist im Gegensatz hierzu bei der ersten Ausführungsform ein Normalenvektor des minimalen Strömungsquerschnitts QM parallel zu der Einströmrichtung E der Hauptachse L der Düse 1 und/oder der Hauptachse LV des Verengungselements 3.

Gemäß der zweiten Ausführungsform ist der minimale Strömungsquerschnitt QM also vorzugsweise durch einen Ring bzw. eine ringförmige Fläche gebildet, der/die eine von dem Ring umschlossene Fläche definiert, wobei die umschlossene Fläche in einer Ebene angeordnet ist, die sich zumindest im Wesentlichen senkrecht zu der Einströmrichtung E, der Hauptachse L der Düse 1 und/oder der Hauptachse LV das Verengungselements 3 erstreckt, wobei jedoch ein Normalenvektor des minimalen Querschnitts QM schräg zu der Einströmrichtung E und/oder der Hauptachse L der Düse 1 und/oder der Hauptachse LV des Verengungselements 3 verläuft.

Nachfolgend wird insbesondere detaillierter auf die dritte Ausführungsform, die insbesondere in Fig. 5 dargestellt ist, eingegangen. Die dritte Ausführungsform stimmt jedoch in einer Vielzahl von Merkmalen mit der ersten und/oder zweiten Ausführungsform gemäß der Figuren 2 bis 4 überein, so dass nachfolgend vorrangig lediglich auf die Unterschiede zwischen der dritten Ausführungsform und der ersten und/oder zweiten Ausführungsform eingegangen wird. Dementsprechend gelten die vorherigen Erläuterungen und Ausführungen mit Bezug auf die erste und/oder zweite Ausführungsform insbesondere auch für die dritte Ausführungsform, sofern nichts anderes explizit erläutert oder aus dem Zusammenhang ersichtlich ist.

Das Verengungselement 3 ist bei der dritten Ausführungsform vorzugsweise der Wandung 2 bzw. einem axialen Ende der Wandung 2 gegenüberliegend angeordnet und/oder an einem axialen Ende der Düse 1 angeordnet.

Vorzugsweise ist das Verengungselement 3 zumindest im Wesentlichen rotationssymmetrisch, insbesondere zu der Hauptachse L der Düse 1. Vorzugsweise ist das Verengungselement 3 zumindest im Wesentlichen torusartig ausgebildet oder weist das Verengungselement 3 einen zumindest im Wesentlichen torusartig ausgebildeten Abschnitt 3A auf.

Das Verengungselement 3 ist vorzugsweise derart angeordnet und/oder dazu ausgebildet, dass die Hauptströmungsrichtung R des Fluids F geändert wird und/oder der Fluidstrom aufgespaltet wird.

Die dritte Ausführungsform stellt vorzugsweise einen Spezialfall der zweiten Ausführungsform dar. Insbesondere geht die dritte Ausführungsform aus der ersten und zweiten Ausführungsform gedanklich vorzugsweise wie folgt hervor:
Bei der ersten Ausführungsform ist die Ausströmrichtung A vorzugsweise parallel zur Einströmrichtung E. Im Vergleich dazu ist in der zweiten Ausführungsform der Winkel zwischen der Ausströmrichtung A und der Einströmrichtung E vergrößert bzw. größer als 0°. Dies wird durch eine entsprechende Veränderung der Form der Wandung 2 und/oder des Verengungselements 3 erreicht. Bei einer weiteren Vergrößerung des Winkels zwischen der Ausströmrichtung A und der Einströmrichtung E auf 90° gelangt man schließlich von der zweiten Ausführungsform zu der dritten Ausführungsform. In diesem Sinne ist die dritte Ausführungsform grundsätzlich ähnlich bzw. identisch zu der ersten und zweiten Ausführungsform, wobei der Hauptunterschied zwischen den Ausführungsformen im Wesentlichen in dem Winkel zwischen der Einströmrichtung E und der Ausströmrichtung A besteht.

Vorzugsweise ist bei der dritten Ausführungsform die Ausströmrichtung A senkrecht zur Einströmrichtung E.

Vorzugsweise ist die Düse 1 gemäß der dritten Ausführungsform dazu ausgebildet, dass Fluid F bzw. das aus dem Fluid F erzeugte Spray radial zur Einströmrichtung E und/oder Hauptachse L der Düse 1 zu versprühen.

Mit anderen Worten ist/sind die Düse 1 und/oder das Verengungselement 3 vorzugsweise dazu ausgebildet, einen Sprühkegel, insbesondere Hohlkegel, mit einem Öffnungswinkel W von zumindest im Wesentlichen 180° zu erzeugen.

Bei der dritten Ausführungsform ist ein Normalenvektor des minimalen Strömungsquerschnitts QM rechtwinklig zu der Hauptachse L der Düse 1. In Fig. 5 ist der Normalenvektor aus Übersichtlichkeitsgründen nicht explizit eingezeichnet, entspricht in seiner Richtung aber der Ausströmrichtung A. Die Ausströmrichtung A ist in Fig. 5 durch entsprechende Pfeile gekennzeichnet.

Gemäß der dritten Ausführungsform ist der minimale Strömungsquerschnitt QM vorzugsweise durch einen Ring bzw. eine ringförmige Fläche gebildet, der/die eine von dem Ring umschlossene Fläche definiert, wobei die umschlossene Fläche in einer Ebene angeordnet ist, die zumindest im Wesentlichen senkrecht zu der Einströmrichtung E und/oder der Hauptachse L der Düse 1 verläuft, wobei jedoch der Normalenvektor des minimalen Strömungsquerschnitts QM senkrecht zu der Einströmrichtung E und/oder der Hauptachse L der Düse 1 verläuft.

Grundsätzlich ist es in einer nicht dargestellten Weiterbildung auch möglich, dass in einer Fortführung der Ausführungsbeispiele gemäß Fig. 2, 4 und 5 der Winkel zwischen Einströmrichtung E und Ausströmrichtung A weiter vergrößert wird, so dass der Öffnungswinkel W des Kegels größer als 180° wird bzw. das Spray zumindest teilweise "zurück" bzw. "nach hinten" gesprüht wird. In diesem Fall weist die Ausströmrichtung A vorzugsweise eine zu der Einströmrichtung E antiparallele Komponente auf.

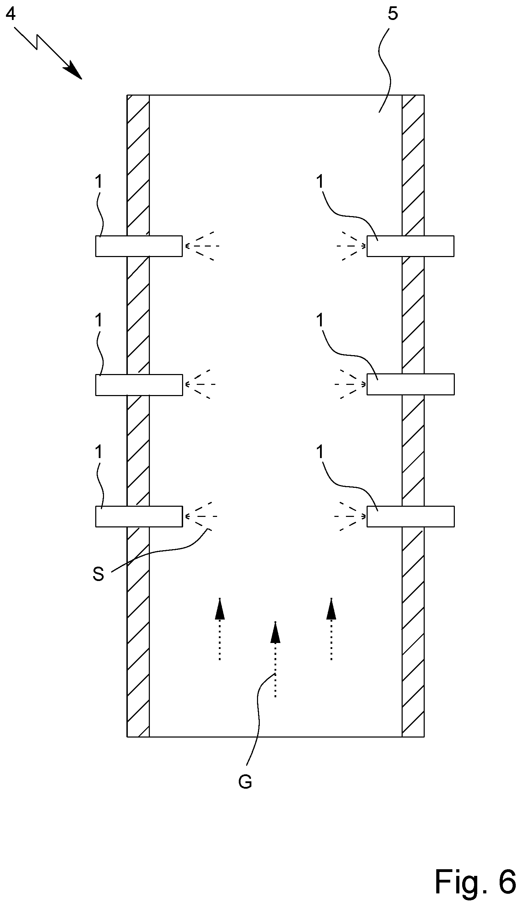

In Fig. 6 ist beispielhaft und sehr schematisch eine Verbrennungsanlage 4 dargestellt. Die Verbrennungsanlage 4 ist bevorzugt eine Großverbrennungsanlage.

Die Verbrennungsanlage 4 weist vorzugsweise mindestens eine, besonders bevorzugt mehrere, Düsen 1 auf. Vorzugsweise sind die Düsen 1 durch Düsenlanzen gebildet oder weisen Düsenlanzen die Düsen 1 auf.

Die Verbrennungsanlage 4 weist vorzugsweise einen Abgasraum 5 auf. Die Düsen (1) ist/sind vorzugsweise zur Verdüsung des Fluids F in den Abgasraum 5 der Verbrennungsanlage 4 ausgebildet und/oder weisen bzw. ragen in den Abgasraum 5 hinein. Insbesondere ist/sind die Düse(n) 1 zur Abgasbehandlung, insbesondere Abgasreinigung, ausgebildet.

Eine "Verbrennungsanlage" bzw. "Großverbrennungsanlage" im Sinne der vorliegenden Erfindung ist vorzugsweise eine insbesondere stationäre Anlage zur Verbrennung beliebiger Stoffe in vorzugsweise großem Maßstab, z. B. eine Müllverbrennungsanlage, ein Kraftwerk oder ein Brennofen.

Der Begriff "Abgasbehandlung" bezeichnet bei der vorliegenden Erfindung vorzugsweise die Behandlung bzw. Reinigung von Abgasen G insbesondere in Verbrennungsanlagen 4. Ganz allgemein kann durch eine Abgasbehandlung die (chemische) Zusammensetzung des Abgases G verändert oder beeinflusst werden. Insbesondere können dabei chemische Verbindungen durch chemische Reaktionen in andere chemische Verbindungen umgewandelt werden und somit bestimmte chemische Verbindungen (zumindest teilweise) aus dem Abgas entfernt werden.

In Verbrennungsanlagen 4 entstehen bei der Verbrennung Abgase G mit einer Vielzahl an, insbesondere giftigen, Schadstoffen, die eine Reinigung des Abgases G erforderlich machen. Insbesondere ist die erlaubte Menge von Schadstoffen im Abgas G in vielen Ländern gesetzlich geregelt, in der Bundesrepublik Deutschland z. B. durch das Bundes-Immissionsschutzgesetz bzw. die Verordnung zur Durchführung des Bundes-Immissionsschutzgesetzes.

Schadstoffe im Sinne der vorliegenden Erfindung sind insbesondere Stickoxide und/oder Schwefeloxide.

Bei der vorliegenden Erfindung ist unter dem Begriff "Abgasbehandlung" vorzugsweise eine Abgasreinigung bzw. Rauchgasreinigung zu verstehen, besonders bevorzugt eine Rauchgasentstickung und/oder Rauchgasentschwefelung. Bei der Rauchgasentstickung werden Stickoxide NOₓ, insbesondere NO und/oder NO₂, zumindest teilweise aus dem Abgas G oder Rauchgas, das bei der Verbrennung entsteht, entfernt. Bei der Rauchgasentschwefelung werden schwefelhaltige Verbindungen bzw. Schwefeloxide, insbesondere SO₂ und/oder SO₃, zumindest teilweise aus dem Abgas oder Rauchgas, das bei der Verbrennung entsteht, entfernt.

Es ist bekannt, dass das Entfernen von Stickoxiden aus dem Abgas G durch eine chemische Reaktion erfolgen kann. Durch Zugabe von Ammoniak (NH₃) bzw. einer Ammoniaklösung, bei der Ammoniak in Wasser gelöst ist, zu dem stickoxidhaltigen Abgas können die Stickoxide aus dem Abgas mit Sauerstoff und der Ammoniaklösung reagieren, so dass als Produkte der Reaktion Stickstoff (N₂) und Wasser (H₂O) entstehen. Es ist auch möglich, zur Entstickung eine Harnstofflösung anstatt einer Ammoniaklösung zu verwenden.

**In** ähnlicher Weise können Schwefeloxide durch Zugabe von, insbesondere in Wasser gelöstem, Calciumoxid oder Calciumcarbonat aus einem schwefeloxidhaltigen Abgas G mittels einer chemischen Reaktion entfernt werden.

Zur Abgasbehandlung bzw. -reinigung wird gemäß der vorliegenden Erfindung ein Wirkfluid - also ein Fluid mit einem Wirkstoff, wie Ammoniak oder Harnstoff oder einer calciumhaltigen Verbindung - in das Abgas G eingedüst bzw. verdüst.

### Bezugszeichenliste:

- 1: Düse
- 2: Wandung
- 3: Verengungselement
- 3A: Abschnitt
- 4: Verbrennungsanlage
- 5: Abgasraum

- A: Ausströmrichtung
- E: Einströmrichtung
- F: Fluid
- G: Abgas
- L: Hauptachse (Düse)
- LV: Hauptachse (Verengungselement)
- P: Pfeile
- QA: Ausgangsquerschnitt
- QE: Eingangsquerschnitt
- QM: minimaler Strömungsquerschnitt
- QV: Querschnittsfläche (Verengungselement)
- R: Hauptströmungsrichtung
- S: Sprühbild
- W: Öffnungswinkel

- P1: Lavaldüse (Stand der Technik)
- P2: minimaler Strömungsquerschnitt (Stand der Technik)
- P3: Hauptachse (Stand der Technik)
- P4: Hauptsprührichtung (Stand der Technik)
- P5: Sprühbild (Stand der Technik)

## Patentansprüche

1. Düse (1) zum Erzeugen eines Sprays aus einem Fluid (F), wobei sich ein Strömungsquerschnitt der Düse (1) in einer Hauptströmungsrichtung (R) bis zu einem minimalen Strömungsquerschnitt (QM) verengt und danach wieder vergrößert,
wobei die Düse (1) eine Wandung (2) und zusätzlich ein von der Wandung (2) beabstandetes Verengungselement (3) aufweist, wobei der minimale Strömungsquerschnitt (QM) zwischen der Wandung (2) und dem Verengungselement (3) gebildet ist,
wobei der minimale Strömungsquerschnitt (QM) ringförmig ist und die Wandung (2) und/oder das Verengungselement (3) dazu ausgebildet ist/sind, den Fluidstrom aufzuspalten,
**dadurch gekennzeichnet,**
**dass** ein Normalenvektor des minimalen Strömungsquerschnitts (QM) rechtwinklig zu einer Hauptachse (L) der Düse (1) ist.

2. Düse nach Anspruch 1, **dadurch gekennzeichnet, dass** das Verengungselement (3) oder ein Abschnitt (3A) davon rundlich und/oder stromlinienförmig, insbesondere zumindest im Wesentlichen kugelartig, kegelartig, ellipsoidal und/oder torusartig ausgebildet ist.

3. Düse nach Anspruch 1 oder 2, **dadurch gekennzeichnet, dass** das Verengungselement (3) rotationssymmetrisch zu der Hauptachse (L) ist.

4. Düse nach Anspruch 3, **dadurch gekennzeichnet, dass** die Düse (1) rotationssymmetrisch zu der Hauptachse (L) ist.

5. Düse nach einem der voranstehenden Ansprüche, **dadurch gekennzeichnet, dass** die Wandung (2) dazu ausgebildet ist, die Hauptströmungsrichtung (R) des Fluids (F) zu ändern.

6. Düse nach einem der voranstehenden Ansprüche, **dadurch gekennzeichnet, dass** das Verengungselement (3) dazu ausgebildet ist, die Hauptströmungsrichtung (R) des Fluids (F) zu ändern.

7. Düse nach einem der voranstehenden Ansprüche, **dadurch gekennzeichnet, dass** das Verengungselement (3) symmetrisch in der Düse (1) angeordnet ist und/oder gemeinsam mit der Wandung (2) einen Strömungskanal bildet, der in einem Längsschnitt zumindest im Wesentlichen
T-förmig ist.

8. Düse nach einem der voranstehenden Ansprüche, **dadurch gekennzeichnet, dass** die Düse (1) und dazu ausgebildet ist, einen Sprühkegel mit einem Öffnungswinkel von etwa 180° zu erzeugen.

9. Verbrennungsanlage (4), insbesondere Großverbrennungsanlage, mit mindestens einer nach einem der voranstehenden Ansprüche ausgebildeten Düse (1), vorzugsweise wobei die Düse (1) zur Verdüsung eines Fluids (F) in einen Abgasraum (5) der Verbrennungsanlage (4) für die Abgasbehandlung, insbesondere Abgasreinigung, ausgebildet ist.

10. Verwendung einer Düse (1) nach einem der Ansprüche 1 bis 8 zur Abgasbehandlung, insbesondere Abgasreinigung, in einer Verbrennungsanlage (4), insbesondere Großverbrennungsanlage.

## Claims

1. Nozzle (1) for generating a spray from a fluid (F), wherein a flow cross section of the nozzle (1) narrows in a main flow direction (R) up to a minimum flow cross section (QM) and then increases again,
wherein the nozzle (1) has a wall (2) and additionally a narrowing element (3) spaced apart from the wall (2), wherein the minimum flow cross section (QM) is formed between the wall (2) and the narrowing element (3),
wherein the minimum flow cross section (QM) is annular and the wall (2) and/or the narrowing element (3) is/are designed to split the fluid flow,
**characterized in that**
a normal vector of the minimum flow cross section (QM) is at right angles to a main axis (L) of the nozzle (1).

2. Nozzle according to claim 1, **characterized in that** the narrowing element (3) or a section (3A) thereof is round and/or streamlined, in particular at least substantially spherical, conical, ellipsoidal and/or toroidal.

3. Nozzle according to claim 1 or 2, **characterized in that** the narrowing element (3) is rotationally symmetrical to the main axis (L).

4. Nozzle according to claim 3, **characterized in that** the nozzle (1) is rotationally symmetrical to the main axis (L).

5. Nozzle according to one of the preceding claims, **characterized in that** the wall (2) is designed to change the main flow direction (R) of the fluid (F).

6. Nozzle according to one of the preceding claims, **characterized in that** the narrowing element (3) is designed to change the main flow direction (R) of the fluid (F).

7. Nozzle according to one of the preceding claims, **characterized in that** the narrowing element (3) is arranged symmetrically in the nozzle (1) and/or together with the wall (2) forms a flow channel which in a longitudinal section is at least substantially T-shaped.

8. Nozzle according to one of the preceding claims, **characterized in that** the nozzle (1) is designed to generate a spray cone with an opening angle of approximately 180°.

9. Combustion plant (4), in particular large combustion plant, having at least one nozzle (1) designed according to one of the preceding claims, preferably wherein the nozzle (1) is designed for atomizing a fluid (F) into an exhaust gas chamber (5) of the combustion plant (4) for the exhaust gas treatment, in particular exhaust gas purification.

10. Use of a nozzle (1) according to one of claims 1 to 8 for exhaust gas treatment, in particular exhaust gas purification, in a combustion plant (4), in particular large combustion plant.

## Revendications

1. Buse (1) pour générer une pulvérisation à partir d'un fluide (F), une section transversale d'écoulement de la buse (1) se rétrécissant dans une direction d'écoulement principale (R) jusqu'à une section transversale d'écoulement minimale (QM) et s'agrandissant ensuite à nouveau,
la buse (1) présentant une paroi (2) et en outre un élément de rétrécissement (3) espacé de la paroi (2), la section transversale d'écoulement minimale (QM) étant formée entre la paroi (2) et l'élément de rétrécissement (3),
la section transversale d'écoulement minimale (QM) étant de forme annulaire et la paroi (2) et/ou l'élément de rétrécissement (3) étant réalisé(s) pour diviser le courant de fluide,
**caractérisée en ce**
**qu'**un vecteur normal de la section transversale d'écoulement minimale (QM) est perpendiculaire à un axe principal (L) de la buse (1).

2. Buse selon la revendication 1, **caractérisée en ce que** l'élément de rétrécissement (3) ou une section (3A) de celui-ci est réalisé de manière arrondie et/ou de manière profilée, en particulier au moins sensiblement de manière sphérique, de manière conique, de manière ellipsoïdale et/ou de manière toroïdale.

3. Buse selon la revendication 1 ou 2, **caractérisée en ce que** l'élément de rétrécissement (3) est symétrique en rotation par rapport à l'axe principal (L).

4. Buse selon la revendication 3, **caractérisée en ce que** la buse (1) est symétrique en rotation par rapport à l'axe principal (L).

5. Buse selon l'une quelconque des revendications précédentes, **caractérisée en ce que** la paroi (2) est réalisée pour modifier la direction d'écoulement principale (R) du fluide (F).

6. Buse selon l'une quelconque des revendications précédentes, **caractérisée en ce que** l'élément de rétrécissement (3) est réalisé pour modifier la direction d'écoulement principale (R) du fluide (F).

7. Buse selon l'une quelconque des revendications précédentes, **caractérisée en ce que** l'élément de rétrécissement (3) est disposé symétriquement dans la buse (1) et/ou forme conjointement avec la paroi (2) un canal d'écoulement qui est au moins sensiblement en forme de T dans une coupe longitudinale.

8. Buse selon l'une quelconque des revendications précédentes, **caractérisée en ce que** la buse (1) est réalisée pour générer un cône de pulvérisation avec un angle d'ouverture d'environ 180°.

9. Installation de combustion (4), en particulier grande installation de combustion, comprenant au moins une buse (1) réalisée selon l'une quelconque des revendications précédentes, de préférence la buse (1) étant réalisée pour la pulvérisation d'un fluide (F) dans un espace de gaz d'échappement (5) de l'installation de combustion (4) pour le traitement de gaz d'échappement, en particulier le nettoyage de gaz d'échappement.

10. Utilisation d'une buse (1) selon l'une quelconque des revendications 1 à 8 pour le traitement de gaz d'échappement, en particulier le nettoyage de gaz d'échappement, dans une installation de combustion (4), en particulier grande installation de combustion.
